# EUROPEAN PATENT APPLICATION

(11) **EP 4 756 754 A1**
(43) Date of publication of application: **10.06.2026**
(21) Application number: 25219975.7
(22) Date of filing: 02.12.2025
(51) Int. Cl.: G07D 7/1205, G07D 7/20

(54) **SHEET RECOGNITION UNIT, SHEET HANDLING DEVICE, SHEET RECOGNITION METHOD, AND SHEET RECOGNITION PROGRAM**

(30) Priority: 05.12.2024 JP 2024212530
(71) Applicant: GLORY LTD., Himeji-shi Hyogo 670-8567 (JP)
(72) Inventor: BANJOYA, Toshihiko, Himeji-shi, 670-8567 (JP)
(74) Representative: SSM Sandmair

(57) **Abstract**

The present disclosure provides a sheet recognition unit, a sheet handling device, a sheet recognition method, and a sheet recognition program capable of identifying various photoluminescent inks accurately. Provided is a sheet recognition unit including: a light source capable of irradiating a sheet on which a photoluminescent ink to be recognized is printed, with at least excitation light; a light receiving unit that receives photoluminescence emitted from the sheet irradiated with the excitation light and outputs a photoluminescence detection signal; and a recognition unit that recognizes the sheet based on a photoluminescent image of the photoluminescent ink to be recognized and a learned model, the photoluminescent image being generated from the photoluminescence detection signal output from the light receiving unit.

## Description

### TECHNICAL FIELD

The present disclosure relates to a sheet recognition unit, a sheet handling device, a sheet recognition method, and a sheet recognition program.

### BACKGROUND ART

Conventionally, a photoluminescent compound is known as a security element attached to a sheet such as a banknote. The photoluminescent compound is excited by, for example, ultraviolet light to emit fluorescent light or phosphorescent light. As a method for detecting these characteristics, for example, those described in the following literature are known.

WO 2015/045186 A discloses a paper sheet counterfeit determination device for determining the authenticity of a paper sheet to which a phosphor is added. The paper sheet counterfeit determination device determines the type of the paper sheet by using a characteristic other than a fluorescent light characteristic, sequentially emits excitation lights of different wavelengths on the paper sheet, measures an intensity of light per wavelength within a predetermined range emitted by a fluorescent material applied to the paper sheet, and acquires fluorescent light characteristic data as the result. The paper sheet counterfeit determination device performs the authentication of the paper sheet by using fluorescent light characteristic data of a genuine paper sheet previously stored per type of the paper sheet or a threshold calculated therefrom and the acquired fluorescent light characteristic data.

### SUMMARY

A photoluminescent ink containing a photoluminescent compound includes various types of photoluminescent inks having different fluorescent spectra. For example, a fluorescent ink having a plurality of peaks in a fluorescent spectrum during irradiation with specific excitation light exists, and also a fluorescent ink having peaks in a visible range and an infrared range exists. On the other hand, in a general contact image sensor (CIS), the fluorescence in the visible range and the fluorescence in the infrared range are difficult to separate due to characteristics of a color filter.

The authenticity determination method disclosed in WO 2015/045186 A does not target fluorescent inks having a plurality of peaks when irradiated with such a specific excitation light. In other words, the authenticity determination method disclosed in WO 2015/045186 A does not take into consideration the correlation between the intensities of the received fluorescent lights of the various wavelength bands.

The present disclosure has been made in view of the above circumstances, and an object thereof is to provide a sheet recognition unit, a sheet handling device, a sheet recognition method, and a sheet recognition program capable of identifying various types of photoluminescent inks accurately.

In order to solve the above problem and achieve the object, (1) a sheet recognition unit according to a first aspect of the present disclosure includes: a light source capable of irradiating a sheet on which a photoluminescent ink to be recognized is printed, with at least excitation light; a light receiving unit that receives photoluminescence emitted from the sheet irradiated with the excitation light and outputs a photoluminescence detection signal; and a recognition unit that recognizes the sheet based on a photoluminescent image of the photoluminescent ink to be recognized and a learned model, the photoluminescent image being generated from the photoluminescence detection signal output from the light receiving unit.

(2) In the sheet recognition unit according to (1), the learned model may receive input of the photoluminescent image or a value based on the photoluminescent image and may output a degree of similarity relative to learning data of the photoluminescent image.

(3) In the sheet recognition unit according to (1) or (2), the learned model may be provided by unsupervised learning using one type of photoluminescent image produced using a genuine photoluminescent ink.

(4) In the sheet recognition unit according to (1) or (2), the learned model may be provided by supervised learning using multiple types of photoluminescent images produced using multiple types of photoluminescent inks including a genuine photoluminescent ink.

(5) In the sheet recognition unit according to any one of (1) to (4), a wavelength of the excitation light emitted from the light source may be shorter than a wavelength of photoluminescence emitted from the sheet and received by the light receiving unit.

(6) In the sheet recognition unit according to any one of (1) to (5), the excitation light emitted from the light source may be ultraviolet light.

(7) A sheet handling device according to a second aspect of the present disclosure includes the sheet recognition unit according to any one of (1) to (6).

(8) A sheet recognition method according to a third aspect of the present disclosure includes: a step of irradiating a sheet on which a photoluminescent ink to be recognized is printed, with at least excitation light from a light source; a step of receiving, with a light receiving unit, photoluminescence emitted from the sheet irradiated with the excitation light and outputting a photoluminescence detection signal; and a step of recognizing the sheet based on a photoluminescent image of the photoluminescent ink to be recognized and a learned model, the photoluminescent image being generated from the photoluminescence detection signal output from the light receiving unit.

(9) A sheet recognition program according to a fourth aspect of the present disclosure causes a sheet recognition unit to execute: a processing of irradiating a sheet on which a photoluminescent ink to be recognized is printed, with at least excitation light from a light source; a processing of receiving, with a light receiving unit, photoluminescence emitted from the sheet irradiated with the excitation light and outputting a photoluminescence detection signal; and a processing of recognizing the sheet based on a photoluminescent image of the photoluminescent ink to be recognized and a learned model, the photoluminescent image being generated from the photoluminescence detection signal output from the light receiving unit.

The present disclosure can provide a sheet recognition unit, a sheet handling device, a sheet recognition method, and a sheet recognition program capable of identifying various types of photoluminescent inks accurately.

### BRIEF DESCRIPTION OF DRAWINGS

FIG. 1 is a schematic diagram illustrating an example of a configuration of a sheet recognition unit according to a first embodiment, and is a diagram viewed from an oblique direction;
FIG. 2 is a schematic perspective view describing an example of a configuration of a light receiving unit included in the sheet recognition unit according to the first embodiment;
FIG. 3 is a schematic diagram illustrating wavelength characteristics of color filters of the light receiving unit included in the sheet recognition unit according to the first embodiment;
FIG. 4 is a flowchart describing an example of an operation of the sheet recognition unit according to the first embodiment;
FIG. 5 is a diagram illustrating color images of ink samples used in each verification test;
FIG. 6 is a graph showing an evaluation result obtained by one-class SVM in a first verification test, showing the score of each sample;
FIG. 7 is a graph showing an evaluation result obtained by multi-class SVM in a second verification test, showing the estimated score of ink for each sample;
FIG. 8 shows the classification results based on the scores shown in FIG. 7;
FIG. 9 is a schematic perspective view illustrating an appearance of an example of a sheet handling device according to a second embodiment;
FIG. 10 is a schematic cross-sectional view describing an example of a configuration of an imaging unit included in the sheet recognition unit according to the second embodiment;
FIG. 11 is a block diagram describing an example of a configuration of the sheet recognition unit according to the second embodiment;
FIG. 12 is a schematic plan view describing an example of a configuration of a light receiving unit included in the sheet recognition unit according to the second embodiment; and
FIG. 13 is a timing chart showing an example of the timing of light emission and light reception by the sheet recognition unit according to the second embodiment.

### DESCRIPTION OF EMBODIMENTS

Hereinafter, embodiments of a sheet recognition unit, a sheet handling device, a sheet recognition method, and a sheet recognition program of the present disclosure will be described in detail with reference to the drawings. Various sheets applicable as target sheets of the present disclosure include banknotes, checks, vouchers, bills, forms, securities, and card-like media. Hereinafter, the present disclosure will be described using devices for banknotes as an example.

Photoluminescence herein is a concept including fluorescence and phosphorescence. Hereinafter, the present disclosure will be described using fluorescence (photoluminescence that can be detected during irradiation with excitation light) as an example of photoluminescence. That is, in the following description, "photoluminescence", "photoluminescence detection signal", "photoluminescent ink", and "photoluminescent image", are respectively "fluorescence", "fluorescence detection signal", "fluorescent ink", and "fluorescent image".

Note that the sheet recognition program may be introduced in advance into the sheet recognition unit and the sheet handling device, or may be provided to an operator with the program being recorded in a computer-readable recording medium or provided via a network.

Thus, the sheet recognition unit and the sheet handling device according to the present disclosure may include a storage unit including storage devices such as semiconductor memories (RAM or ROM) and hard disks.

In the following description, the same reference signs are appropriately used for the same portions or portions having similar functions between different drawings, and repeated description thereof is appropriately omitted. Further, in the drawings illustrating a structure, XYZ coordinate systems orthogonal to each other are appropriately illustrated.

### (First Embodiment)

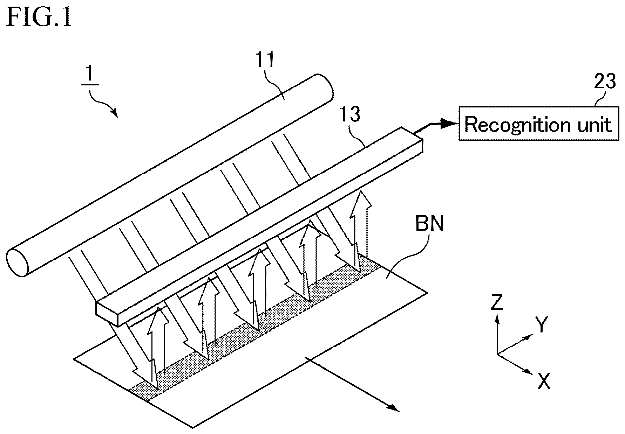

A configuration of the sheet recognition unit according to the present embodiment will be described with reference to FIG. 1.

As illustrated in FIG. 1, a sheet recognition unit 1 according to the present embodiment detects fluorescence emitted from a banknote BN to be recognized, and includes a light source 11, a light receiving unit 13, and a recognition unit 23. The light source 11 is capable of irradiating a banknote BN on which a fluorescent ink to be recognized is printed, with at least excitation light. The light receiving unit 13 receives fluorescence emitted from the banknote BN irradiated with the excitation light and outputs a fluorescence detection signal. The recognition unit 23 recognizes the banknote BN based on a fluorescent image of the fluorescent ink to be recognized, the fluorescent image being generated from the fluorescence detection signal output from the light receiving unit 13.

Here, the banknote BN to be recognized may be transported in an X direction in an XY plane. A Y direction may correspond to a main scanning direction of the light receiving unit 13, and the X direction may correspond to a sub-scanning direction of the light receiving unit 13.

The light source 11 irradiates the banknote BN with excitation light to excite the fluorescent ink to be recognized. The light source 11 may be disposed on the same side as the light receiving unit 13 with respect to the banknote BN.

A wavelength of the excitation light emitted from the light source 11 is not limited, and can be set appropriately according to the fluorescent ink. The wavelength may be shorter than a wavelength of fluorescence emitted from the banknote BN (the fluorescent ink) and received by the light receiving unit 13. As described above, the fluorescent ink used in the present embodiment may absorb energy of light in a specific wavelength band and emit the energy as light in a longer wavelength band.

More specifically, the excitation light emitted from the light source 11 may be ultraviolet light.

The light source 11 may be longer than the length of the banknote BN in the Y direction, and may irradiate the banknote BN entirely in the Y direction with light linearly extending along the Y direction. In this case, the light source 11 may include a transparent, linear rod-shaped light guide, and light emitting elements (usually, a plurality of light emitting diodes (LEDs), for example) facing at least one of both end surfaces of the light guide. The light source 11 may irradiate the banknote BN with light via the light guide.

The light receiving unit 13 is configured to be able to receive (detect) fluorescence emitted from the fluorescent ink to be recognized on the banknote BN during emission of the excitation light. At this time, the light receiving unit 13 can function as a sensor having sensitivity at least in the wavelength band of the fluorescence emitted from the fluorescent ink to be recognized. The light receiving unit 13 may be a sensor having sensitivity in a wavelength band covering at least a visible range to an infrared range (or a near-infrared range). The light receiving unit 13 then outputs an electric signal (which may be a digital signal) corresponding to the amount of incident light (light receiving amount). That is, the fluorescence detection signal is an electric signal that depends on the amount of incident light (fluorescence) emitted from the banknote BN during a turn-on period of the excitation light.

The light receiving unit 13 may include one or more light receiving elements, and the light receiving elements may receive light, convert the light into an electric signal that depends on the amount of incident light, and output the electric signal.

The light receiving unit 13 may be longer than the length of the banknote BN in the Y direction, and may receive light transmitted through, reflected from, or emitted from the entire banknote BN in the Y direction.

The light receiving unit 13 may output an electric signal depending on the amount of incident light as image data. At this time, the light receiving unit 13 may include a plurality of pixels arranged in a row in the Y direction (main scanning direction). That is, the light receiving unit 13 may output an electric signal depending on the amount of incident light at a plurality of channels corresponding to the plurality of pixels (positions in the Y direction (main scanning direction)). Note that the channels (columns) are numbers sequentially allocated to the light receiving elements (imaging elements) in the Y direction. At this time, the light receiving unit 13 may output, as image data, line data that is data related to the light simultaneously received at each channel. The image data of the entire banknote BN may be output by repeating irradiation with light from the light source 11 and reception of light by the light receiving unit 13 while transporting the banknote BN in the X direction (sub-scanning direction).

As described above, the light source 11 and the light receiving unit 13 may acquire the image of the entire banknote BN by continuously and repeatedly executing imaging of a predetermined cycle as one period.

In this specification, one cycle refers to a control pattern in which the timing of turning on and off the light emitting elements in each wavelength band, signal reading, and the like are set. The fluorescence detection signal may be acquired from an entire sheet by continuously and repeatedly executing the control pattern of one cycle as one period. One cycle may indicate a periodic control pattern related to turning-on, turning-off, and receiving light, the control pattern being set to acquire a reflective image and/or transmissive image of the sheet.

The reflective image is an image based on light emitted from a light source disposed on the same side as the light receiving unit with respect to the sheet and reflected from the sheet. The transmissive image is an image based on light emitted from a light source disposed on an opposite side from the light receiving unit with respect to the sheet and transmitted through the sheet. Therefore, the reflective image and the transmissive image are distinguished from a fluorescent image based on fluorescence emitted from a sheet.

The image data that can be acquired by the light receiving unit 13 includes a plurality of pixels arranged in a matrix pattern in the Y direction (main scanning direction) and the X direction (sub-scanning direction). An address of each pixel is specified by a channel (column) of the light receiving unit 13 corresponding to the position in the Y direction and a line (row) corresponding to the position in the X direction. The line (row) is a number sequentially allocated to the line data sequentially output from the light receiving unit 13.

The light receiving unit 13 may receive light in a plurality of wavelength bands coming from the banknote BN and output an electric signal (fluorescence detection signal) for each of the plurality of wavelength bands. In this case, each pixel may include a plurality of light receiving elements that selectively receive light in different wavelength bands.

Examples of the plurality of wavelength bands in which the light receiving unit 13 can selectively receive light include red (R), green (G), blue (B), and infrared (IR) bands.

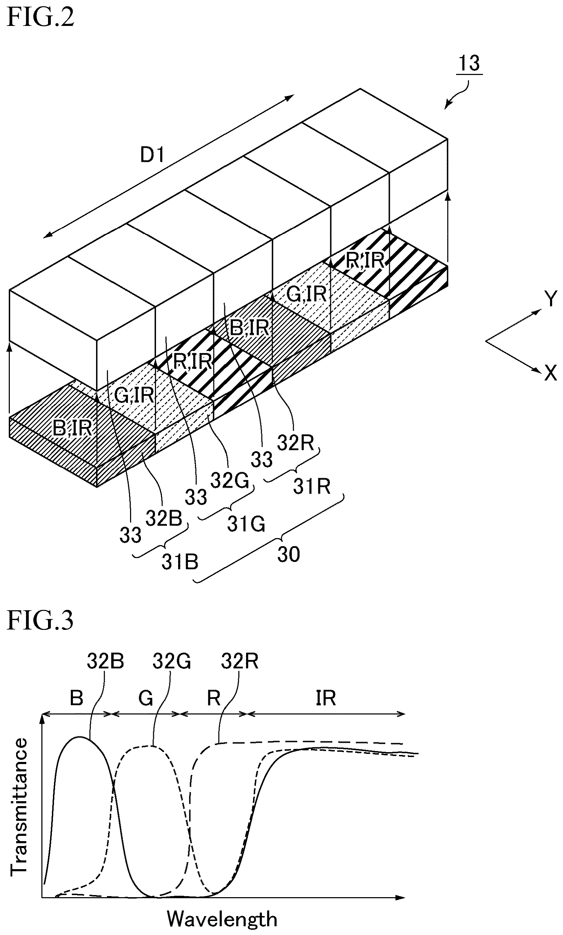

As illustrated in FIG. 2, the light receiving unit 13 may include a first light receiving element 31B having a color filter 32B, a second light receiving element 31G having a color filter 32G, and a third light receiving element 31R having a color filter 32R.

The light receiving unit 13 may include a plurality of pixels 30 arranged in a line in a main scanning direction D1 (direction orthogonal to a transport direction of a banknote BN, i.e. a Y direction). Each pixel 30 may include one first light receiving element (imaging element) 31B, one second light receiving element (imaging element) 31G, and one third light receiving element (imaging element) 31R. The first light receiving element 31B, the second light receiving element 31G, and the third light receiving element 31R may be arranged in a line in this order in the main scanning direction D1.

Here, the light receiving element (imaging element) means an element that detects the intensity of light in a predetermined wavelength band (converts into an electric signal). The light receiving element may include a photodetector such as a photodiode, and a color filter (color resist) that is disposed on a light receiving surface of the photodetector and reduces transmission of light in wavelength bands (for example, green and red wavelength bands) excluding predetermined wavelength bands (for example, blue and infrared wavelength bands) to be detected.

As illustrated in FIG. 2, the first light receiving element 31B may include a photodetector 33 and the color filter 32B, the second light receiving element 31G may include the photodetector 33 and the color filter 32G, and the third light receiving element 31R may include the photodetector 33 and the color filter 32R.

As illustrated in FIG. 3, the color filter 32B transmits blue light and infrared light, the color filter 32G transmits green light and infrared light, and the color filter 32R transmits red light and infrared light. Therefore, the first light receiving element 31B, the second light receiving element 31G, and the third light receiving element 31R receive infrared light together with the corresponding visible light. The color filter 32B absorbs green light and red light, the color filter 32G absorbs blue light and red light, and the color filter 32R absorbs blue light and green light.

The light receiving unit 13 may collectively receive, at each light receiving element, the fluorescent component in the visible range and the fluorescent component in the infrared range emitted from the banknote BN (fluorescent ink) irradiated with the excitation light without separating them. The light receiving unit 13 then may output a fluorescence detection signal including a signal value that depends on a light amount of the sum of both the components.

Even in such a case, the sheet recognition unit 23 can recognize various types of fluorescent inks including fluorescent inks that emit fluorescence in the visible range and the infrared range, respectively.

Specifically, the recognition unit 23 recognizes the banknote BN based on a fluorescent image of the fluorescent ink to be recognized (hereafter, this fluorescent image is also simply referred to as "fluorescent image to be recognized") and a learned model, the fluorescent image being generated from the fluorescence detection signal output from the light receiving unit 13. The learned model enables identification of various fluorescent inks based on slight differences among fluorescence detection signals. Even if the light receiving unit 13 cannot separate fluorescence in the visible range from fluorescence in the infrared range, the learned model enables identification of various fluorescent inks including a fluorescent ink that emits fluorescence in the visible range and the infrared range, based on the fluorescent image to be recognized. In other words, according to the present embodiment, various fluorescent inks can be identified accurately.

The fluorescent image to be recognized is a color image of the fluorescent ink to be recognized that has emitted fluorescence when irradiated with specific excitation light from the light source 11. The fluorescent ink to be recognized may be imaged over the entire area of the image. The shape of the fluorescent image to be recognized is not limited, and can be set appropriately according to the printing region for the fluorescent ink to be recognized. The shape may be, for example, rectangular.

More specifically, the learned model may receive input of a fluorescent image to be recognized or a value based on the fluorescent image to be recognized, and may output a degree of similarity relative to learning data (training data) of the fluorescent image to be recognized.

As above, the learned model may receive input of the fluorescent image to be recognized itself, i.e., RGB values of the fluorescent image to be recognized, or receive input of the values based on the fluorescent image to be recognized. The phrase "values based on the fluorescent image to be recognized" here means the values calculated from the image data of the fluorescent image to be recognized, and may refer to the representative values of the fluorescent image to be recognized. Specific examples of the representative values include the average values and the median values for the RGB values.

The learned model basically receives input of data in the same format as the learning data. Specifically, if the learning data is a fluorescent image itself, the learned model receives input of the fluorescent image itself, and if the learning data is the average value of a fluorescent image, the learned model receives input of the average value of a fluorescent image.

The "degree of similarity to the learning data" is almost synonymous with the "distance to the learning data". They both are indices for comparing the fluorescent image to be recognized with the learning data. The degree of similarity is a measure of how similar the fluorescent image to be recognized is to the learning data. The distance is a measure of how dissimilar the fluorescent image to be recognized is to the learning data. More specifically, the phrase "the learned model outputs a degree of similarity relative to learning data of the fluorescent image to be recognized" also includes a case where the learned model outputs the distance of the fluorescent image to be recognized to the learning data.

The recognition unit 23 may compare the degree of similarity output from the learned model with predetermined reference data (for example, a threshold) to identify or classify the fluorescent image to be recognized. The recognition unit 23 may then recognize the banknote BN, for example, determine the authenticity or the presence or absence of the fluorescent ink, based on the result of identification or classification.

The learned model may be provided by unsupervised learning using one type of fluorescent image produced using a genuine fluorescent ink. In this case, the data of the fluorescent ink to be recognized and the learning data are compared, thereby evaluating the degree of similarity, that is, the degree to which the data of the fluorescent ink to be recognized is abnormal compared to the learning data. Accordingly, whether or not the fluorescent ink to be recognized is a genuine fluorescent ink can be determined based on the degree of similarity (abnormality). As such a model, specifically, a one-class support-vector machine (SVM), an auto encoder, or the like can be used, for example.

One type of fluorescent image used in unsupervised learning may be an image itself or values based on the image, namely, values calculated from the image data. In the latter case, the values may be representative values (for example, the average values, median values, etc. of each of the RGB values) of the fluorescent image. To the values based on one type of fluorescent image, for example, one-class SVM is applicable, and to one type of fluorescent image itself, for example, an auto encoder is applicable.

One type of fluorescent image used in unsupervised learning may be a single image alone or multiple images of the same type.

The learned model may be provided by supervised learning using multiple types of fluorescent images produced using multiple types of fluorescent inks including a genuine fluorescent ink. In this case, the data of the fluorescent ink to be recognized and the learning data are compared to evaluate to which class of the learning data the fluorescent ink to be recognized is most similar (closest). Accordingly, the fluorescent ink to be recognized can be identified based on the degree of similarity (distance) to each class. As such a model, specifically, a multi-class support-vector machine (SVM), a neural network such as convolutional neural network (CNN), or the like can be used, for example.

Multiple types of fluorescent images used in supervised learning may each be an image itself or values based on the image, namely, values calculated from the image data. In the latter case, the values may be representative values (for example, the average values, median values, etc. of each of the RGB values) of the fluorescent image. To the values based on multiple types of fluorescent images, for example, multi-class SVM is applicable, and to multiple types of fluorescent images themselves, for example, a neural network such as CNN is applicable.

Multiple types of fluorescent images used in supervised learning may be a single image for each type or multiple images of the same type for one or more types of fluorescent images.

Multiple types of fluorescent inks including a genuine fluorescent ink used in supervised learning may consist of multiple types of genuine fluorescent inks, or may include one or more types of genuine fluorescent inks and one or more types of ungenuine inks (for example, counterfeit fluorescent inks).

Additional learning may be performed on the learned model. In other words, learning data different from that used in initial learning may be applied to the learned model to perform further learning.

The genuine fluorescent ink used in unsupervised learning and supervised learning is compared with the fluorescent ink to be recognized, and emits fluorescence in a predetermined wavelength band during irradiation with the excitation light (for example, ultraviolet light). The genuine fluorescent ink may include one or more, for example, two or more types of photoluminescent compounds.

The fluorescence characteristics of the genuine fluorescent ink used in unsupervised learning and supervised learning are not limited. For example, the genuine fluorescent ink may include a fluorescent ink that emits fluorescence in a plurality of wavelength bands, for example, the visible range and the infrared range, or may include a fluorescent ink that emits fluorescence in a single wavelength band. Similarly, the fluorescence spectrum of the genuine fluorescent ink may have a peak in each of the plurality of wavelength bands, for example, the visible range and the infrared range, or may have a peak only in a single wavelength band. Here, the infrared range may be a near-infrared range. Hereinafter, a fluorescent ink having a peak in each of the visible range and the infrared range may be referred to as a special fluorescent ink.

The special fluorescent ink hardly emits light even when irradiated with visible light, and transmits visible light. Therefore, the special fluorescent ink is not visually recognized by human eyes under irradiation with visible light, for example, under natural light or under general artificial illumination. When the special fluorescent ink is irradiated with the excitation light, a fluorescent component that emits light in the visible range can be visually recognized by human eyes. However, even in this case, a fluorescent component that emits light in the infrared range cannot be visually recognized by human eyes. Therefore, the special fluorescent ink can function as a highly secure security element.

For example, ink containing a mixture of a photoluminescent compound that emits fluorescence in the visible range and a photoluminescent compound that emits fluorescence in the infrared range may be printed on a printing portion of the special fluorescent ink. Alternatively, ink containing the photoluminescent compound that emits fluorescence in the visible range and ink containing the photoluminescent compound that emits fluorescence in the infrared range may be applied to be superimposed on the printing portion.

As for the special fluorescent ink, the fluorescence spectrum may have a peak in at least one of a blue wavelength band, a green wavelength band, or a red wavelength band. In the visible range, the fluorescence spectrum may have a peak only in one of the blue wavelength band, the green wavelength band, or the red wavelength band.

As for the special fluorescent ink, the fluorescence spectrum may have a peak in the infrared range, or may have a peak in the near infrared range.

In this specification, blue means light (color) having a wavelength of approximately 400 to 500 nm, and may be light (color) having a peak wavelength in this wavelength band. Green means light (color) having a wavelength of approximately 500 to 600 nm, and may be light (color) having a peak wavelength in this wavelength band. Red means light (color) having a wavelength of approximately 600 to 750 nm, and may be light (color) having a peak wavelength in this wavelength band. The infrared light means light having a wavelength of approximately 750 nm or more, and may be light having a peak wavelength in this wavelength band. The near-infrared light means light having a wavelength of approximately 750 to 1500 nm, and may be light having a peak wavelength in this wavelength band.

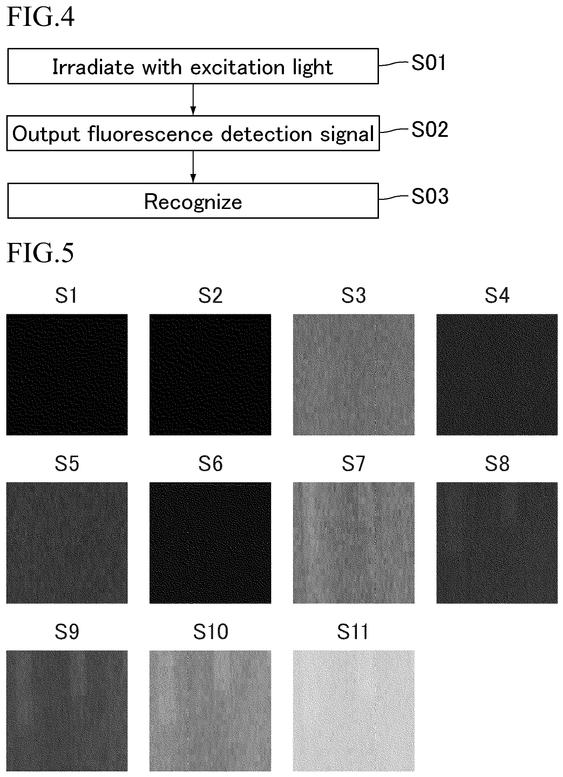

An operation of the sheet recognition unit 1 according to the present embodiment will be described below with reference to FIG. 4.

As illustrated in FIG. 4, the light source 11 irradiates the banknote BN on which a fluorescent ink to be recognized is printed, with at least excitation light (step S01).

Next, the light receiving unit 13 receives fluorescence emitted from the banknote BN irradiated with the excitation light and outputs a fluorescence detection signal (step S02).

Then, the recognition unit 23 recognizes the banknote BN based on a fluorescent image of the fluorescent ink to be recognized and the learned model, the fluorescent image being generated from the fluorescence detection signal output from the light receiving unit 13 (step S03), whereby the operation of the sheet recognition unit 1 is completed.

The recognition unit 23 may be operated by a control unit, described later, executing an appropriate program.

Here, the verification test in which a fluorescent ink was actually identified based on the learned model is described.

In each verification test, samples S1 to S11 prepared by printing 11 types of inks on white paper were used. FIG. 5 illustrates color images captured by irradiating the samples S1 to S11 with ultraviolet light. Although the images in FIG. 5 are illustrated in gray scale, color images were used in the actual verification test. In each verification test, 10 color images were provided for each sample. The inks of the samples S1 and S2 are not fluorescent inks but inks that do not emit fluorescence in the visible range and in the infrared range. The inks of the samples S3 and S4 are fluorescent inks that each have an emission peak in the green wavelength band in the visible range (the samples S3 and S4 are different in peak intensity) but do not emit fluorescence in the infrared range. The inks of the samples S5 and S6 are fluorescent inks that each have an emission peak in the near-infrared range (the samples S5 and S6 are different in peak intensity) but do not emit fluorescence in the visible range. The samples S7 to S11 are special fluorescent inks that each have an emission peak in the green wavelength band in the visible range and an emission peak in the near-infrared range (the samples S7 to S11 are different in peak intensity). That is, the color images of the samples S3 to S11 are color fluorescent images.

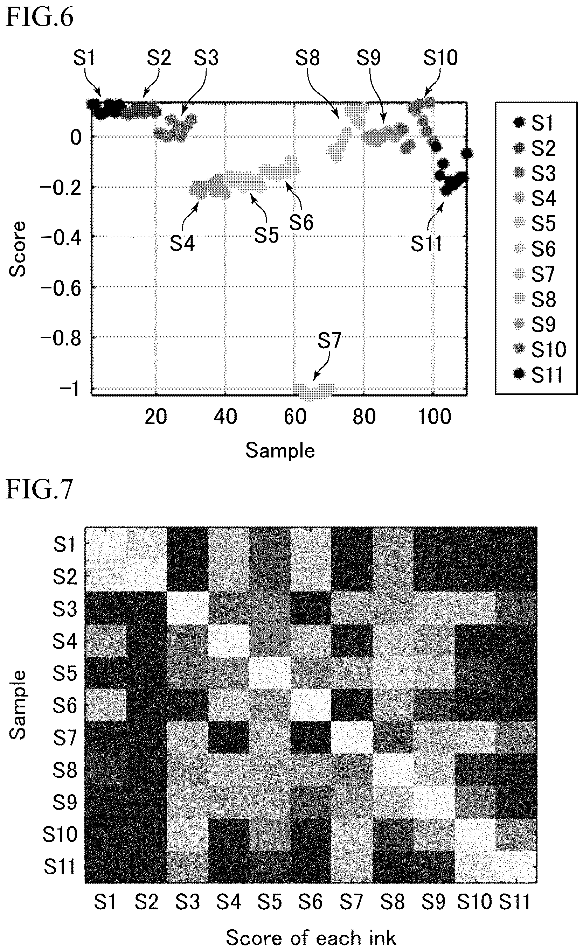

As a first verification test, unsupervised learning using one-class SVM was applied to the representative values (specifically, the average values of each of the RGB values) of the color image of the sample S7, and the representative values (specifically, the average values of each of the RGB values) of the color images of the samples S1 to S11 were input to the one-class SVM. The output scores of the samples are shown in FIG. 6. Each score indicates the degree of similarity (abnormality) of each input sample to the sample S7. In FIG. 6, a larger score indicates less similarity. As shown in FIG. 6, the scores of the samples other than the sample S7 are apparently larger than the score of the sample S7, so if a threshold is set between these scores, for example, between -0.8 and -0.6, it is possible to accurately determine whether or not each input sample is the special fluorescent ink of the sample S7.

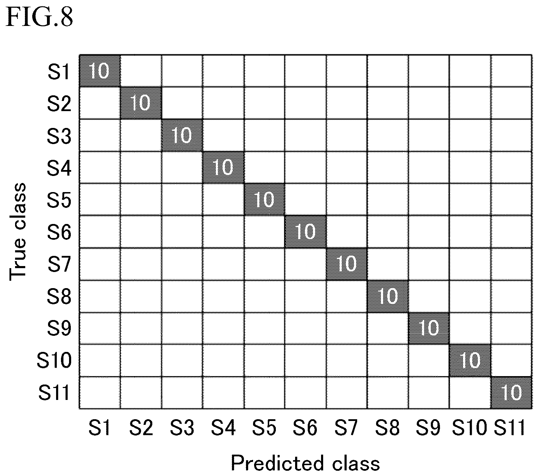

Next, as a second verification test, supervised learning using multi-class SVM was applied to the representative values (specifically, the average values of each of the RGB values) of the color images of the samples S1 to S11, and the representative values (specifically, the average values of each of the RGB values) of the color images of the samples S1 to S11 were input to the multi-class SVM. The output scores of the samples are shown in FIG. 7. In FIG. 7, the samples input to the multi-class SVM are shown in the vertical direction and the scores of the input samples relative to the samples S1 to S11 are shown in the horizontal direction. A brighter color indicates a larger score. Each score indicates the degree of similarity of each input sample to each of the samples S1 to S11. In FIG. 7, a larger score indicates greater similarity. FIG. 8 shows the results of classifying the scores in FIG. 7 output from the multi-class SVM using a predetermined threshold. As a result, it can be seen that each input sample (true class) and the classified sample (predicted class) matched for all 10 images of each sample (no misidentification), and various fluorescent inks were accurately identified.

### (Second Embodiment)

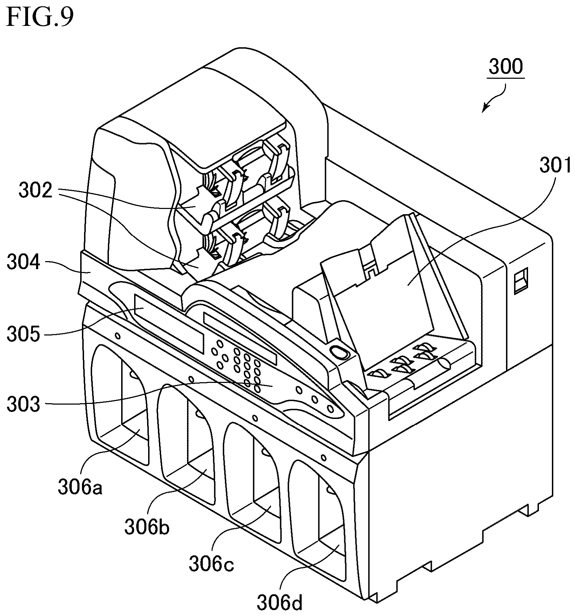

A sheet handling device according to the present embodiment may have, for example, a configuration illustrated in FIG. 9. A sheet handling device 300 illustrated in FIG. 9 is a small sheet handling device installed and used on a table. This device includes a sheet recognition unit (not illustrated in FIG. 9), a hopper 301, two rejection units 302, an operation unit 303, four stacking units 306a to 306d, and a display unit 305. The sheet recognition unit executes banknote recognition processing. On the hopper 301, a plurality of banknotes to be handled is placed in a stacked state. The rejection units 302 reject a rejection banknote when the banknote fed from the hopper 301 into a housing 304 is a rejection banknote, such as a counterfeit note or a suspect note. The operation unit 303 is for inputting an instruction from an operator. The stacking units 306a to 306d are for sorting and stacking banknotes whose denominations, authenticity, and fitness have been recognized in the housing 304. The display unit 305 is for displaying information such as recognition and count results of banknotes and the stacking statuses of the stacking units 306a to 306d. Among the four stacking units 306a to 306d, fit notes are stored in the stacking units 306a to 306c, and soiled notes are stored in the stacking unit 306d based on the result of the fitness determination by the sheet recognition unit. A method for distributing banknotes into the stacking units 306a to 306d can be optionally set.

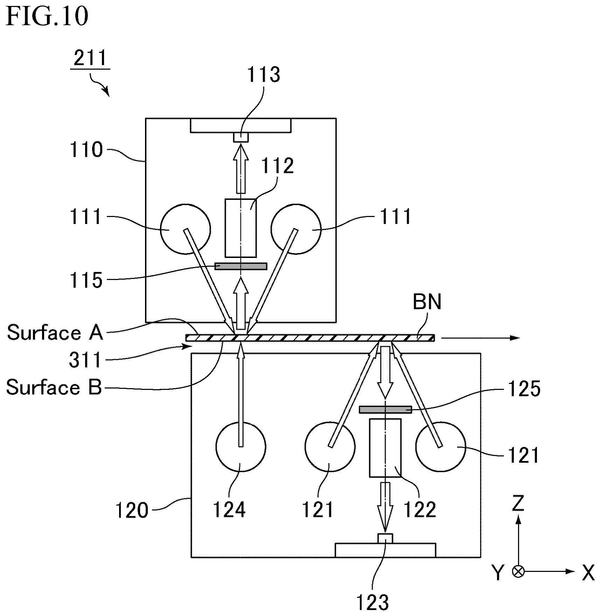

A configuration of an imaging unit that is a main unit of the sheet recognition unit according to the present embodiment will be described below with reference to FIG. 10. As illustrated in FIG. 10, an imaging unit 211 includes an upper unit 110 and a lower unit 120 disposed to face each other. A gap through which a banknote BN is transported in an X direction in an XY plane is formed between the upper unit 110 and the lower unit 120 separated from each other in a Z direction. This gap constitutes a part of a transport path of the sheet handling device according to the present embodiment. The upper unit 110 and the lower unit 120 are positioned on the upper side (+Z direction) and the lower side (-Z direction) of the transport path, respectively. The Y direction corresponds to a main scanning direction of the imaging unit 211, and the X direction corresponds to a sub-scanning direction of the imaging unit 211.

As illustrated in FIG. 10, the upper unit 110 includes two light sources 111 for reflection, a condensing lens 112, a light receiving unit 113, and an UV-cutting film 115. The light source 111 for reflection sequentially irradiates a main surface (hereinafter, surface A) of the banknote BN on the light receiving unit 113 side with irradiation light having different wavelength bands, specifically, infrared light, white light including red light, green light, and blue light, and ultraviolet light as excitation light for fluorescence. The condensing lens 112 condenses light emitted from the light source 111 for reflection and reflected from the surface A of the banknote BN, light emitted from a light source 124 for transmission disposed in the lower unit 120 and transmitted through the banknote BN, and fluorescence emitted on the surface A of the banknote BN. The light receiving unit 113 receives the light condensed by the condensing lens 112 and converts the light into an electric signal. After the electric signal is amplified, the electric signal is A-D converted into digital data and then the digital data is output. Here, the light received by the light receiving unit is also referred to as incident light, and the light emitted from the light source is also referred to as irradiation light. The UV-cutting film 115 prevents ultraviolet light emitted from the light source 111 for reflection and reflected by the surface A of the banknote BN from being received by the light receiving unit 113 via the condensing lens 112.

The lower unit 120 includes two light sources 121 for reflection, one light source 124 for transmission, a condensing lens 122, a light receiving unit 123 and a UV-cutting film 125. The light source 121 for reflection sequentially irradiates a main surface (hereinafter, surface B) of the banknote BN on the light receiving unit 123 side with irradiation light having different wavelength bands, specifically, infrared light, white light including red light, green light, and blue light, and ultraviolet light as excitation light for fluorescence. The condensing lens 122 condenses light emitted from the light source 121 for reflection and reflected from the surface B of the banknote BN, and fluorescence emitted on the surface B of the banknote BN. The light receiving unit 123 receives the light condensed by the condensing lens 122 and converts the light into an electric signal. After the electric signal is amplified, the electric signal is A-D converted into digital data and then the digital data is output. The UV-cutting film 125 prevents ultraviolet light emitted from the light source 121 for reflection and reflected by the surface B of the banknote BN from being received by the light receiving unit 123 via the condensing lens 122.

The light source 124 for transmission is disposed on an optical axis of the condensing lens 112 of the upper unit 110. The light emitted from the light source 124 for transmission is partially transmitted through the banknote BN, is condensed by the condensing lens 112 of the upper unit 110, and is detected by the light receiving unit 113. The light source 124 for transmission may sequentially or simultaneously irradiate the surface B of the banknote BN with irradiation light having different wavelength bands.

In this specification, light having different wavelength bands (irradiation light, incident light, etc.) is, for example, light having different colors as visible light, and is light having wavelength bands partially overlapping or light having non-overlapping wavelength bands as infrared light and ultraviolet light.

Each of the light sources 111, 121, and 124 includes a linear light guide (not illustrated) extending in a direction (main scanning direction D1) perpendicular to the sheet surface of FIG. 10, and a plurality of light-emitting diode (LED) elements (not illustrated) disposed at both ends (or one end) of the light guide.

Each of the light sources 111 and 121 may include an LED element that emits infrared light having a peak wavelength of 750 nm or more, an LED element that emits red light (R) having a peak wavelength of 600 nm or more and less than 750 nm, an LED element that emits green light (G) having a peak wavelength of 500 nm or more and less than 600 nm, an LED element that emits blue light (B) having a peak wavelength of 400 nm or more and less than 500 nm, and an LED element that emits ultraviolet light (UV) having a peak wavelength of less than 400 nm. One light source 111 is disposed on each of the upstream side and downstream side in the transport direction with the condensing lens 112 being interposed therebetween. One light source 121 is disposed on each of the upstream side and downstream side in the transport direction with the condensing lens 122 being interposed therebetween.

The light source 124 may include a plurality of LED elements that emit light having peak wavelengths different from each other. Note that the peak wavelength means a wavelength at which light emission intensity is maximum.

As illustrated in FIG. 2, each of the light receiving units 113 and 123 includes a plurality of pixels 30 arranged in a line in the main scanning direction D1 (direction orthogonal to the transport direction of the banknote BN, i.e. the Y direction). Each pixel 30 includes one first light receiving element (imaging element) 31B having a color filter 32B, one second light receiving element (imaging element) 31G having a color filter 32G, and one third light receiving element (imaging element) 31R having a color filter 32R. Further, the first light receiving element 31B, the second light receiving element 31G, and the third light receiving element 31R are disposed in a line along the main scanning direction D1 in this order.

Each of the upper unit 110 and the lower unit 120 repeatedly images the banknote BN transported in the transport direction and outputs a signal that depends on a light receiving amount. As a result, the imaging unit 211 acquires an image of the entire banknote BN. Specifically, the imaging unit 211 acquires a transmissive image of the banknote BN and a reflective image of the surface A based on the output signal from the upper unit 110, and acquires a reflective image of the surface B of the banknote BN based on the output signal from the lower unit 120.

The imaging unit 211 further acquires a fluorescence detection signal for the entire banknote BN on each of the surface A and the surface B of the banknote BN. That is, the imaging unit 211 can acquire the fluorescent images of the surface A and the surface B of the banknote BN.

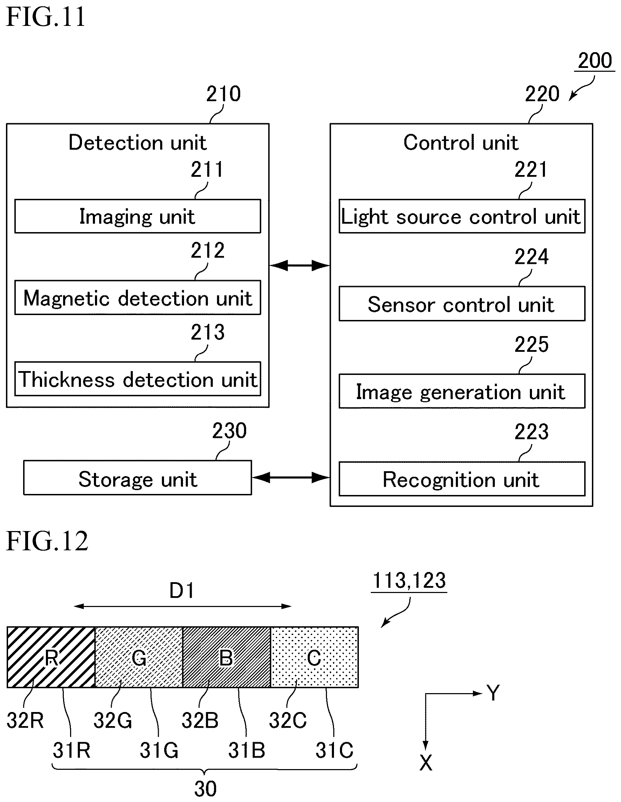

A configuration of the sheet recognition unit according to the present embodiment will be described below with reference to FIG. 11. As illustrated in FIG. 11, a sheet recognition unit 200 according to the present embodiment includes a detection unit 210, a control unit 220, and a storage unit 230.

The control unit 220 is a controller that controls respective units of the sheet recognition unit 200. The control unit 220 includes a program for implementing various types of processing stored in the storage unit 230, a central processing unit (CPU) that executes the program, and various types of hardware (for example, a field programmable gate array (FPGA)) controlled by the CPU. The control unit 220 controls respective units of the sheet recognition unit 200 based on signals output from the respective units of the sheet recognition unit 200 and control signals from the control unit 220 in accordance with the program stored in the storage unit 230. The control unit 220 further has functions of a light source control unit 221, a sensor control unit 224, an image generation unit 225, and a recognition unit 223 in accordance with a program stored in the storage unit 230.

The detection unit 210 includes a magnetic detection unit 212 and a thickness detection unit 213 in addition to the above-described imaging unit 211 along the transport path of a banknote. The imaging unit 211 images a banknote and outputs an image signal (image data) as described above. The magnetic detection unit 212 includes a magnetic sensor (not illustrated) that measures magnetism. The magnetic sensor detects magnetism of magnetic ink, a security thread, etc. printed on a banknote. The magnetic sensor is a magnetic line sensor in which a plurality of magnetic detection elements is arranged in a line. The thickness detection unit 213 includes a thickness detection sensor (not illustrated) that measures a thickness of a banknote. The thickness detection sensor detects tape, multi feed, etc. As for the thickness detection sensor, a sensor disposed at each roller detects a displacement amount during passing of a banknote at rollers facing each other with the transport path interposed therebetween.

The storage unit 230 includes a nonvolatile storage device such as a semiconductor memory or a hard disk, and stores various programs and various data for controlling the sheet recognition unit 200. The storage unit 230 may store the learned model used for recognition processing executed by the recognition unit 223. The storage unit 230 further stores, as imaging parameters, a wavelength band of irradiation light emitted from each of the light sources 111, 121, and 124 during one cycle of imaging by the imaging unit 211, a timing of turning on and off each of the light sources 111, 121, and 124, a value of a forward current flowing through the LED elements of each of the light sources 111, 121, and 124, a timing of reading a signal from each of the upper unit 110 and the lower unit 120, and the like.

Note that the one cycle of imaging refers to an imaging pattern in which the wavelength band of the irradiation light emitted from each of the light sources 111, 121, and 124, and the timing of turning on and off each of the light sources 111, 121, and 124, and signal reading are set. An image of the entire banknote is acquired by continuously and repeatedly executing the imaging in one cycle as one period.

The light source control unit 221 makes dynamic lighting control of each of the light sources 111, 121, and 124 in order to capture an individual image of a banknote obtained using each of the light sources 111, 121, and 124. Specifically, the light source control unit 221 controls turning-on and turning-off of the light sources 111, 121, and 124 based on the timing set as the imaging parameter. This control is made using a mechanical clock that changes depending on the transport speed of a banknote and a system clock that is always output at a constant frequency regardless of the transport speed of a banknote.

The sensor control unit 224 controls a timing of reading a signal from each of the upper unit 110 and the lower unit 120 based on the timing set as the imaging parameter, and reads a signal from each of the upper unit 110 and the lower unit 120 in synchronization with the timing of turning on and off the light sources 111, 121, and 124. This control is performed using the mechanical clock and the system clock. The sensor control unit 224 then sequentially stores the read signals, that is, the line data in a ring buffer (line memory) of the storage unit 230.

The line data means data based on a signal obtained from a single imaging performed by each of the upper unit 110 and the lower unit 120, and corresponds to data for one row in a horizontal direction (direction orthogonal to the transport direction of a banknote, i.e., the Y direction) of the acquired image.

The image generation unit 225 has a function of generating an image based on various signals related to a banknote acquired from the detection unit 210. Specifically, the image generation unit 225 first decomposes the data (image signal) stored in the ring buffer into data for each condition of light irradiation and light reception. The image generation unit 225 then executes correction processing for cutting a dark output, adjusting gain, and correcting a bright output level in accordance with the characteristic of each piece of decomposed data, generates various types of image data of the banknote, and stores the image data in the storage unit 230.

The recognition unit 223 recognizes the banknote BN to be recognized using the fluorescence detection signal obtained in the imaging unit 211.

More specifically, the recognition unit 223 cuts out a region where a fluorescent ink to be recognized is imaged from a color fluorescent image of the entire banknote BN, the color fluorescent image being created by the image generation unit 225, and inputs the cut-out image or the representative values (for example, the average values for each of the RGB values) calculated from the cut-out image as detection data to the learned model. The cut-out region may be set appropriately for the type of a banknote. The learned model outputs the degree of similarity that indicates how similar the input data (the cut-out image or its representative values) is to the learning data. The recognition unit 223 compares the output degree of similarity with the predetermined reference data (e.g., threshold) to recognize the banknote BN. For example, whether or not the fluorescent ink to be recognized is a genuine fluorescent ink may be determined, or which of the multiple types of fluorescent inks, including a genuine fluorescent ink, the fluorescent ink to be recognized is may be determined (classified).

Here, other examples of a light source for reflection and a light receiving unit in the upper unit 110 and the lower unit 120, and the control method thereof are described.

As shown in FIG. 12, each pixel 30 in each of the light receiving units 113 and 123 may include a fourth light receiving element (imaging element) 31C having a clear filter 32C in addition to the first light receiving element (imaging element) 31B having the color filter 32B, the second light receiving element (imaging element) 31G having the color filter 32G, and the third light receiving element (imaging element) 31R having the color filter 32R.

As illustrated in FIG. 3, the color filter 32B transmits blue light and infrared light, the color filter 32G transmits green light and infrared light, and the color filter 32R transmits red light and infrared light. Therefore, the first light receiving element 31B, the second light receiving element 31G, and the third light receiving element 31R receive infrared light together with the corresponding visible light. The color filter 32B absorbs green light and red light, the color filter 32G absorbs blue light and red light, and the color filter 32R absorbs blue light and green light.

In contrast, the clear filter 32C transmits light at least from the short-wavelength limit of the visible range to a predetermined wavelength (for example, 1100 nm) in the infrared range.

The fourth light receiving element 31C may not have a filter such as the clear filter 32C or a color filter.

Each of the light sources 111 and 121 for reflection includes an LED element that emits red light (R) having a peak wavelength of 600 nm or more and less than 750 nm, an LED element that emits green light (G) having a peak wavelength of 500 nm or more and less than 600 nm, an LED element that emits blue light (B) having a peak wavelength of 400 nm or more and less than 500 nm, and an LED element that emits ultraviolet light (UV) having a peak wavelength of less than 400 nm.

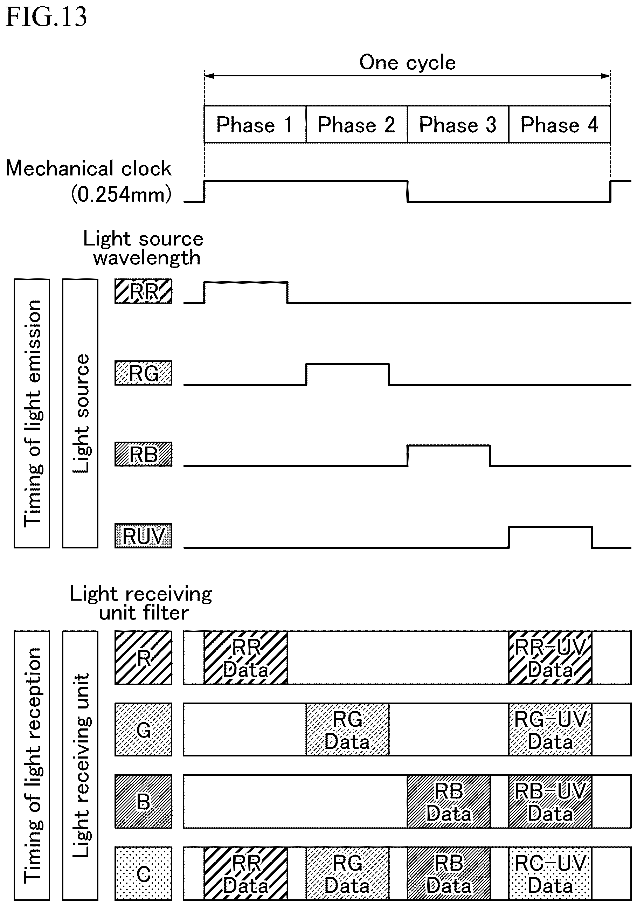

According to the timing chart shown in FIG. 13, each of the upper unit 110 and the lower unit 120 repeatedly images the banknote BN transported in the transport direction. As a result, the imaging unit 211 acquires an image of the entire banknote BN.

In other words, four phases are executed as one cycle repeatedly. In phases 1 to 3, each of the light sources 111 and 121 for reflection sequentially turn-on the LED element that emits red light (R), the LED element that emits green light (G), and the LED element that emits blue light (B), while the first to third light receiving elements sequentially receive the reflected red light (RR), reflected green light (RG), and reflected blue light (RB). In each of the phases 1 to 3, the fourth light receiving element also sequentially receives reflected red light (RR), reflected green light (RG), and reflected blue light (RB). In phase 4, each of the light sources 111 and 121 for reflection turns on the LED element that emits ultraviolet light (UV), while the first to third light receiving elements receives red fluorescence (RR-UV), green fluorescence (RG-UV), and blue fluorescence (RB-UV), respectively, and the fourth light receiving element receives fluorescence (RC-UV) from the visible range to the infrared range.

This enables doubling the resolution in the main scanning direction of the reflected image data, compared to the case where the fourth light receiving element 31C is not provided. Specifically, for example, the resolution of the reflected image data can be set to 200 dpi × 100 dpi in the main scanning direction × sub-scanning direction for each of R, G, and B. In this case, the resolution of the fluorescent image data is set to 100 dpi × 100 dpi in the main scanning direction × sub-scanning direction for each of R, G, B, and C (clear).

### (First Modification)

In the above embodiments, the case where fluorescence is detected as photoluminescence has been described, but phosphorescence (photoluminescence that can be detected after excitation light is turned off) may be used. In this case, a light receiving unit receives phosphorescence emitted from a banknote to be recognized after ultraviolet light as excitation light is turned off. A phosphorescence detection signal is then output. Similarly to the fluorescence detection signal, the recognition processing can be executed using the phosphorescence detection signal. For example, a banknote can be recognized based on a phosphorescent image of a phosphorescent ink to be recognized and the leaned model, the phosphorescent image being generated from the phosphorescence detection signal output from the light receiving unit. This makes it possible to authenticate various phosphorescent inks that emit phosphorescence in a predetermined wavelength band after emission of ultraviolet light as excitation light. For example, a special phosphorescent ink having peaks in the visible range and the infrared range can be identified. Similarly to the special fluorescent ink, the special phosphorescent ink can also function as a security element with high security because a phosphorescent component that emits light in the infrared region cannot be visually recognized by human eyes.

Although the embodiments have been described above with reference to the drawings, the present disclosure is not limited to the above embodiments. The configurations of the respective embodiments may be appropriately combined or modified without departing from the gist of the present disclosure.

As described above, the present disclosure is a technique useful for identifying various photoluminescent inks accurately.

### REFERENCE SIGNS LIST

1, 200: sheet recognition unit
11, 111, 121, 124: light source
13, 113, 123: light receiving unit
23, 223: recognition unit
30: pixel
31B, 31G, 31R, 31C: light receiving element
32B, 32G, 32R, 32C: color filter
33: photodetector
110: upper unit
112, 122: condensing lens
115, 125: UV-cutting film
120: lower unit
210: detection unit
211: imaging unit
212: magnetic detection unit
213: thickness detection unit
220: control unit
221: light source control unit
224: sensor control unit
225: image generation unit
230: storage unit
300: banknote handling device
301: hopper
302: rejection unit
303: operation unit
304: housing
305: display unit
306a to 306d: stacking unit
BN: banknote

## Claims

1. A sheet recognition unit comprising:
a light source capable of irradiating a sheet on which a photoluminescent ink to be recognized is printed, with at least excitation light;
a light receiving unit that receives photoluminescence emitted from the sheet irradiated with the excitation light and outputs a photoluminescence detection signal; and
a recognition unit that recognizes the sheet based on a photoluminescent image of the photoluminescent ink to be recognized and a learned model, the photoluminescent image being generated from the photoluminescence detection signal output from the light receiving unit.

2. The sheet recognition unit according to claim 1,
wherein the learned model receives input of the photoluminescent image or a value based on the photoluminescent image and outputs a degree of similarity relative to learning data of the photoluminescent image.

3. The sheet recognition unit according to claim 1 or 2,
wherein the learned model is provided by unsupervised learning using one type of photoluminescent image produced using a genuine photoluminescent ink.

4. The sheet recognition unit according to claim 1 or 2,
wherein the learned model is provided by supervised learning using multiple types of photoluminescent images produced using multiple types of photoluminescent inks including a genuine photoluminescent ink.

5. The sheet recognition unit according to any one of claims 1 to 4,
wherein a wavelength of the excitation light emitted from the light source is shorter than a wavelength of photoluminescence emitted from the sheet and received by the light receiving unit.

6. The sheet recognition unit according to any one of claims 1 to 5,
wherein the excitation light emitted from the light source is ultraviolet light.

7. A sheet handling device comprising the sheet recognition unit according to any one of claims 1 to 6.

8. A sheet recognition method comprising:
a step of irradiating a sheet on which a photoluminescent ink to be recognized is printed, with at least excitation light from a light source;
a step of receiving, with a light receiving unit, photoluminescence emitted from the sheet irradiated with the excitation light and outputting a photoluminescence detection signal; and
a step of recognizing the sheet based on a photoluminescent image of the photoluminescent ink to be recognized and a learned model, the photoluminescent image being generated from the photoluminescence detection signal output from the light receiving unit.

9. A sheet recognition program, causing a sheet recognition unit to execute:
a processing of irradiating a sheet on which a photoluminescent ink to be recognized is printed with at least excitation light from a light source;
a processing of receiving, with a light receiving unit, photoluminescence emitted from the sheet irradiated with the excitation light and outputting a photoluminescence detection signal; and
a processing of recognizing the sheet based on a photoluminescent image of the photoluminescent ink to be recognized and a learned model, the photoluminescent image being generated from the photoluminescence detection signal output from the light receiving unit.
